# EUROPEAN PATENT APPLICATION

(11) **EP 4 830 949 A1**
(43) Date of publication of application: **28.10.2026**
(21) Application number: 24906475.9
(22) Date of filing: 19.12.2024
(51) Int. Cl.: B60H 1/00

(54) **VEHICLE AIR CONDITIONER CONTROL METHOD, AND VEHICLE**

(30) Priority: 21.12.2023 CN 202311775185
(71) Applicant: Great Wall Motor Company Limited, Baoding, Hebei 071000 (CN)
(72) Inventor: WANG, Kaituo, Baoding, Hebei 071000 (CN)
(74) Representative: Michalski Hüttermann & Partner mbB
(86) International application number: PCT/CN2024/140748
(87) International publication number: WO 2025/131000

(57) **Abstract**

Provided is a method for controlling an air conditioner of a vehicle. The method includes: generating at least one air conditioner adjustment instruction, an instruction category of the air conditioner adjustment instruction including at least one of a safety category, an environment category, and an energy-saving category; determining a target adjustment instruction from the at least one air conditioner adjustment instruction based on a predetermined priority sequence corresponding to the instruction category; and adjusting an internal and external circulation mode of an air conditioner based on the target adjustment instruction. An electronic device and a vehicle are also provided. With the method for controlling the air conditioner of the vehicle, the electronic device, and the vehicle, a driving safety and comfort demand can be met, thereby improving driving experience of a user.

## Description

This application claims priority to Chinese patent application No. 202311775185.9, titled "VEHICLE AIR CONDITIONER CONTROL METHOD, AND VEHICLE", filed with the China National Intellectual Property Administration on December 21, 2023, the entire contents of which are incorporated herein by reference.

### FIELD

The present disclosure relates to the field of vehicle control technologies, and more particularly, to a vehicle and a method for controlling an air conditioner of a vehicle.

### BACKGROUND

With the accelerated development of automotive electronic technology, higher requirements have been put forward for automotive comfort, safety, and environmental protection. An air circulation function of an on-board air conditioning system can guarantee physical and mental health of an occupant inside the vehicle and further improve driving comfort. Therefore, the air circulation function has gradually become one of focuses of a vehicle. A conventional vehicle involves fewer operating conditions, and thus an air conditioning control system does not suffer from a control logic conflict. With increased vehicle control functions, a situation arises where multiple operating conditions simultaneously regulate the air conditioning control system, resulting in the control logic conflict and thus affecting normal use of an air conditioner.

### SUMMARY

In view of this, an objective of the present disclosure is to provide a vehicle and a method for controlling an air conditioner of a vehicle, to solve a problem of a control logic conflict occurring in an air conditioning control system.

Based on the above objective, a first aspect of the present disclosure provides a method for controlling an air conditioner of a vehicle. The method includes: generating at least one air conditioner adjustment instruction, where an instruction category of the at least one air conditioner adjustment instruction includes at least one of a safety category, an environment category, and an energy-saving category; determining, based on a predetermined priority sequence corresponding to the instruction category, a target adjustment instruction from the at least one air conditioner adjustment instruction; and adjusting, based on the target adjustment instruction, an internal and external circulation mode of the air conditioner.

Optionally, said determining, based on the predetermined priority sequence corresponding to the instruction category, the target adjustment instruction from the at least one air conditioner adjustment instruction includes: determining a category priority corresponding to each of the at least one air conditioner adjustment instruction based on a category priority sequence in the predetermined priority sequence, where the instruction category in the category priority sequence is, in descending order, the safety category, the environment category, and the energy-saving category; determining, in response to presence of a plurality of air conditioner adjustment instructions with the same category priority, an instruction priority of each of the plurality of air conditioner adjustment instructions with the same category priority based on an instruction priority sequence in the predetermined priority sequence; and determining an air conditioner adjustment instruction with a highest priority among all the air conditioner adjustment instructions as the target adjustment instruction.

Optionally, said determining, in response to the presence of the plurality of air conditioner adjustment instructions with the same category priority, the instruction priority of each of the plurality of air conditioner adjustment instructions with the same category priority based on the instruction priority sequence in the predetermined priority sequence includes: determining, in response to the instruction category of each of the plurality of air conditioner adjustment instructions being the environment category, the instruction priority of each of the plurality of air conditioner adjustment instructions based on an instruction priority sequence corresponding to the environment category, where an instruction in the instruction priority sequence corresponding to the environment category is, in descending order, a pollutant full internal circulation instruction, a full internal circulation instruction for car washing or window washing, and a ventilation external circulation instruction.

Optionally, said generating the at least one air conditioner adjustment instruction includes: obtaining vehicle information and/or environment information; and generating, based on the vehicle information and/or the environment information, the at least one air conditioner adjustment instruction.

Optionally, the vehicle information includes humidity on an inner surface of a front windshield of the vehicle and a surface temperature of the front windshield, the environment information includes an in-vehicle temperature, and the air conditioner adjustment instruction includes a defrosting external circulation enabling instruction. Said generating, based on the vehicle information and/or the environment information, the at least one air conditioner adjustment instruction includes: calculating a dew point based on the humidity on the inner surface of the front windshield and the in-vehicle temperature; determining a fogging risk level based on the surface temperature of the front windshield and the dew point; and generating, in response to the fogging risk level exceeding a predetermined level threshold, the defrosting external circulation enabling instruction, where an external circulation air damper opening degree in the defrosting external circulation enabling instruction is positively correlated with the fogging risk level, and the instruction category of the defrosting external circulation enabling instruction is the safety category.

Optionally, the environment information includes an out-of-vehicle pollutant concentration, and the air conditioner adjustment instruction includes a pollutant full internal circulation instruction. Said generating, based on the vehicle information and/or the environment information, the at least one air conditioner adjustment instruction includes: generating, in response to the out-of-vehicle pollutant concentration exceeding a predetermined concentration threshold, the pollutant full internal circulation instruction, where the pollutant full internal circulation instruction is configured to switch a current internal and external circulation mode of the air conditioner to a full internal circulation mode of the air conditioner, and an instruction category of the pollutant full internal circulation instruction is the environment category.

Optionally, the vehicle information includes a current operating condition, and the air conditioner adjustment instruction includes a full internal circulation instruction for car washing or window washing. Said generating, based on the vehicle information and/or the environment information, the at least one air conditioner adjustment instruction includes: generating, in response to the current operating condition being a car washing operating condition or a window washing operating condition, the full internal circulation instruction for car washing or window washing, where the full internal circulation instruction for car washing or window washing is configured to switch a current internal and external circulation mode of the air conditioner to a full internal circulation mode of the air conditioner, and an instruction category of the full internal circulation instruction for car washing or window washing is the environment category.

Optionally, the vehicle information includes an air outlet temperature of the air conditioner, and the air conditioner adjustment instruction includes a ventilation external circulation instruction. Said generating, based on the vehicle information and/or the environment information, the at least one air conditioner adjustment instruction includes: generating the ventilation external circulation instruction in response to a current internal and external circulation mode of the air conditioner being a full internal circulation mode and a duration of the full internal circulation mode exceeding a first predetermined duration threshold, where the ventilation external circulation instruction is configured to switch the current internal and external circulation mode from the full internal circulation mode to a full external circulation mode, and an instruction category of the ventilation external circulation instruction is the environment category.

Optionally, the vehicle information includes a current internal and external circulation mode of the air conditioner and a current control mode of the air conditioner, the environment information includes an in-vehicle temperature and an out-of-vehicle temperature, and the air conditioner adjustment instruction includes an energy-saving full internal circulation enabling instruction. Said generating, based on the vehicle information and/or the environment information, the at least one air conditioner adjustment instruction includes: generating the energy-saving full internal circulation enabling instruction in response to the current control mode of the air conditioner being a heating mode and the current internal and external circulation mode of the air conditioner being an automatic mode, or the current control mode of the air conditioner being a ventilation mode and the current internal and external circulation mode of the air conditioner being the automatic mode, or the current control mode of the air conditioner being a cooling mode and the in-vehicle temperature being lower than or equal to the out-of-vehicle temperature, where the energy-saving full internal circulation enabling instruction is configured to switch the current internal and external circulation mode of the air conditioner to a full internal circulation mode, and an instruction category of the energy-saving full internal circulation enabling instruction is the energy-saving category.

Optionally, the vehicle information includes a current vehicle speed and distribution of other vehicles within a predetermined range in front of the vehicle, and the air conditioner adjustment instruction includes a full external circulation instruction. Said generating, based on the vehicle information and/or the environment information, the at least one air conditioner adjustment instruction includes: generating the full external circulation instruction in response to the current vehicle speed exceeding a second predetermined vehicle speed, or the distribution of other vehicles within the predetermined range in front of the vehicle indicating that no other vehicles present.

Optionally, the vehicle information includes a current internal and external circulation mode of the air conditioner and a current control mode of the air conditioner, the environment information includes an in-vehicle temperature and an out-of-vehicle temperature, and the air conditioner adjustment instruction includes a full external circulation instruction. Said generating, based on the vehicle information and/or the environment information, the at least one air conditioner adjustment instruction includes: generating the full external circulation instruction in response to the current control mode of the air conditioner being a ventilation mode and the current internal and external circulation mode of the air conditioner being an external circulation mode; and generating the full external circulation instruction in response to the current control mode of the air conditioner being a cooling mode and the in-vehicle temperature being higher than the out-of-vehicle temperature.

Optionally, the vehicle information includes a current operating condition, and the air conditioner adjustment instruction includes a target opening degree adjustment instruction. Said generating, based on the vehicle information and/or the environment information, the at least one air conditioner adjustment instruction includes: determining, in response to the current operating condition being a rainy operating condition, a target opening degree based on a current water vapor content corresponding to the rainy operating condition and a first predetermined adjustment relationship, and generating, based on the target opening degree, the target opening degree adjustment instruction, where the target opening degree adjustment instruction is configured to adjust an external circulation air damper opening degree of the air conditioner from a current opening degree of an external circulation air damper to the target opening degree, and where in the first predetermined adjustment relationship, the current water vapor content is negatively correlated with the target opening degree.

Optionally, the vehicle information includes a current vehicle speed, and the air conditioner adjustment instruction includes an internal circulation air damper opening degree adjustment instruction and an external circulation air damper opening degree adjustment instruction. Said generating, based on the vehicle information and/or the environment information, the at least one air conditioner adjustment instruction includes: determining, in response to the current vehicle speed exceeding a predetermined vehicle speed threshold, the internal circulation air damper opening degree adjustment instruction and the external circulation air damper opening degree adjustment instruction based on the current vehicle speed and a second predetermined adjustment relationship, where the internal circulation air damper opening degree adjustment instruction is configured to adjust an internal circulation air damper opening degree of the air conditioner from a current opening degree of an internal circulation air damper to an opening degree indicated by the internal circulation air damper opening degree adjustment instruction, and where the external circulation air damper opening degree adjustment instruction is configured to adjust an external circulation air damper opening degree of the air conditioner from the current opening degree of the external circulation air damper to an opening degree indicated by the external circulation air damper opening degree adjustment instruction, and where in the second predetermined adjustment relationship, the current vehicle speed is positively correlated with the internal circulation air damper opening degree, and the current vehicle speed is negatively correlated with the external circulation air damper opening degree.

A second aspect of the present disclosure provides an apparatus for controlling an air conditioner of a vehicle. The apparatus includes a processor configured to execute the following program modules stored in a memory: a generation module configured to generate at least one air conditioner adjustment instruction, where an instruction category of the at least one air conditioner adjustment instruction includes at least one of a safety category, an environment category, and an energy-saving category; a determination module configured to determine, based on a predetermined priority sequence corresponding to the instruction category, a target adjustment instruction from the at least one air conditioner adjustment instruction; and an adjustment module configured to adjust, based on the target adjustment instruction, an internal and external circulation mode of the air conditioner.

A third aspect of the present disclosure provides an electronic device. The electronic device includes: a memory; a processor; and a computer program stored on the memory and executable on the processor. The processor, when executing the program, implements the method according to the first aspect.

A fourth aspect of the present disclosure provides a vehicle. The vehicle includes the electronic device according to the third aspect.

As can be seen from the above, the present disclosure provides the vehicle and the method for controlling an air conditioner of a vehicle. The method for controlling an air conditioner of a vehicle includes generating the at least one air conditioner adjustment instruction. The at least one air conditioner adjustment instruction is generated based on a current operating condition of the vehicle and current environment information, indicating that the current operating condition satisfies multiple vehicle usage conditions. Different adjustment instructions correspond to different vehicle usage conditions. The instruction category of the air conditioner adjustment instruction includes the at least one of the safety category, the environment category, and the energy-saving category. Finely dividing the instruction category can help to reasonably formulate a priority order among instructions. Executing the air conditioner adjustment instruction according to the priority order can help to ensure driving safety and comfort. When there are multiple adjustment instructions for the air conditioning control system at the same time, it is necessary to determine a target adjustment instruction from the at least one air conditioner adjustment instruction according to a predetermined priority order. That is, the target adjustment instruction is an air conditioner adjustment instruction with a highest current priority, which can satisfy a current main driving requirement for a user, to avoid a control logic conflict when multiple adjustment instructions are executed simultaneously, causing the air conditioning system to fail to operate normally. After determining the target adjustment instruction, the internal and external circulation mode of the air conditioner is adjusted based on the target adjustment instruction, to satisfy a demand of vehicle driving safety and comfort, improving driving experience of the user.

### BRIEF DESCRIPTION OF THE DRAWINGS

To more clearly illustrate the present disclosure or technical solutions in the related art, accompanying drawings required to be used in the description of the embodiments or in the related art are briefly described below. Obviously, the accompanying drawings in the following descriptions are only embodiments of the present disclosure. For those skilled in the art, other accompanying drawings can be obtained from these accompanying drawings without creative labor.
FIG. 1 is a schematic flowchart of a method for controlling an air conditioner of a vehicle according to an embodiment of the present disclosure.
FIG. 2 is a schematic flowchart of a method for determining a target adjustment instruction according to an embodiment of the present disclosure.
FIG. 3 is a schematic flowchart of a method for controlling an air conditioner of a vehicle according to another embodiment of the present disclosure.
FIG. 4 is a schematic flowchart of a method for controlling an air conditioner of a vehicle according to another embodiment of the present disclosure.
FIG. 5 is a schematic flowchart of a method for controlling an air conditioner of a vehicle according to another embodiment of the present disclosure.
FIG. 6 is a schematic structural diagram of a vehicle air conditioner control apparatus according to an embodiment of the present disclosure.
FIG. 7 is a schematic structural diagram of hardware of an electronic device according to an embodiment of the present disclosure.

### DETAILED DESCRIPTION

Embodiments of the present disclosure are described in detail below with reference to the accompanying drawings.

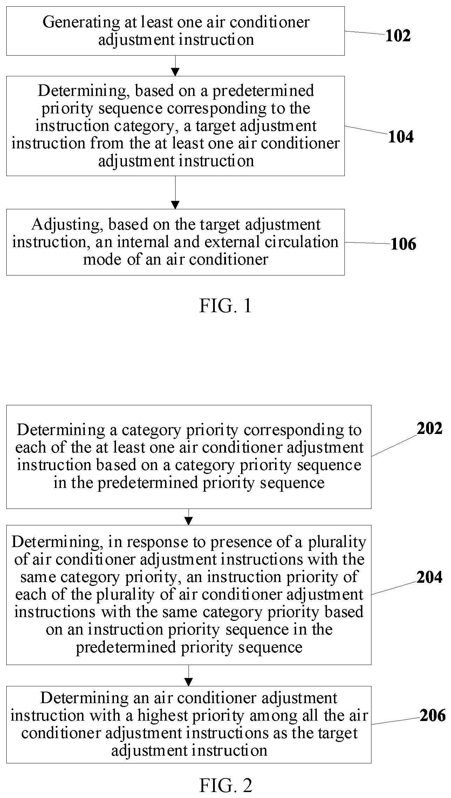

The present disclosure provides a method for controlling an air conditioner of a vehicle applied to a vehicle control unit. As illustrated in FIG. 1, the method includes following steps 102 to 106.

At step 102, at least one air conditioner adjustment instruction is generated. An instruction category of the at least one air conditioner adjustment instruction includes at least one of a safety category, an environment category, and an energy-saving category.

Specifically, the air conditioner adjustment instruction is generated based on current driving information of the vehicle and current surrounding environment information. The driving information is obtained from various controllers or processors of the vehicle. The surrounding environment information may be obtained by sensors mounted on the vehicle, such as a temperature sensor, a humidity sensor, and a camera. A current operating condition of the vehicle may include multiple different operating conditions such as a defogging condition, an external air pollutant existence condition, and an energy-saving condition. Different air conditioner adjustment instructions are generated for different operating conditions. Different air conditioner adjustment instructions correspond to different air conditioner control logics. In this embodiment, the air conditioner adjustment instruction is classified into three instruction categories, namely the safety category, the environment category, and the energy-saving category. The safety category refers to an instruction category that may affect driving safety, such as a defogging instruction. The defogging instruction may be used to eliminate fog on a front windshield of a vehicle, avoiding blocking the driver's sight, which can form a potential driving safety risk. The environment category refers to an instruction category that may affect an in-vehicle environment, such as a pollutant adjustment instruction, a ventilation instruction, a window washing instruction. An air conditioner adjustment instruction of the environment category may be used to control an internal and external circulation system of the air conditioner to ensure good air quality inside the vehicle, providing a driver with a comfortable and healthy driving environment. The energy-saving category refers to an instruction category that may affect vehicle energy consumption, such as an energy-saving adjustment instruction. The energy-saving instruction may be used to adjust an internal and external circulation mode of the air conditioner, further optimizing an operating mode and an operating efficiency of the air conditioner on the premise of meeting a user usage demand for the air conditioner, reducing vehicle energy consumption, and thus improving a vehicle cruising capability.

Fine classification of the instruction category can facilitate formulation of a priority sequence adaptable to various vehicle usage conditions, to meet a user usage demand for the air conditioner use under complex operating conditions.

At step 104, based on a predetermined priority sequence corresponding to the instruction category, a target adjustment instruction is determined from the at least one air conditioner adjustment instruction.

Specifically, priorities corresponding to respective instruction categories are defined in the predetermined priority sequence. Different instruction categories are assigned different priorities. Exemplarily, when the instruction category includes the safety category, the environment category, and the energy-saving category, the predetermined priority sequence includes three priority levels, i.e., a first-level priority, a second-level priority, and a third-level priority. Different priority levels are assigned to different instruction categories according to an influence of the instruction category on driving safety and comfort to form the predetermined priority sequence. The predetermined priority sequence may be set according to different vehicle models and different usage demands for a vehicle. After the predetermined priority sequence is determined, an air conditioner adjustment instruction with a highest priority may be selected as the target adjustment instruction from the at least one air conditioner adjustment instruction. The target adjustment instruction can reflect the most dominant current usage demand of the vehicle. Each of other air conditioner adjustment instructions has a lower priority than the target adjustment instruction. Based on the predetermined priority sequence, the air conditioner adjustment instruction with the highest priority can be accurately determined from the at least one air conditioner adjustment instruction, avoiding a control logic conflict caused by simultaneous execution of multiple instructions.

At step 106, based on the target adjustment instruction, an internal and external circulation mode of the air conditioner is adjusted.

Specifically, after the target adjustment instruction is determined, the internal and external circulation mode of the air conditioner is adjusted based on the target adjustment instruction, to satisfy a user driving demand. Exemplarily, if the target adjustment instruction indicates that full internal circulation is required, external circulation is disabled on the basis of the current internal and external circulation mode of the air conditioner, and an internal circulation air damper opening degree is adjusted to a maximum value. If the target adjustment instruction indicates that full external circulation is required, internal circulation is disabled on the basis of the current internal and external circulation mode of the air conditioner, and an external circulation air damper opening degree is adjusted to a maximum value. If the target adjustment instruction indicates that proportional internal and external circulation is required, the current internal circulation air damper opening degree and the current external circulation air damper opening degree are adjusted based on a target internal circulation air damper opening degree and a target external circulation air damper opening degree included in the target adjustment instruction.

Based on the above steps 102 to 106, this embodiment provides the method for controlling an air conditioner of a vehicle. The method includes generating the at least one air conditioner adjustment instruction. The at least one air conditioner adjustment instruction is generated based on a current operating condition of the vehicle and current environment information, indicating that the current operating condition satisfies multiple vehicle usage conditions. Different adjustment instructions correspond to different vehicle usage conditions. The instruction category of the air conditioner adjustment instruction includes the at least one of the safety category, the environment category, and the energy-saving category. Finely dividing the instruction category can help to reasonably formulate a priority order among instructions. Executing the air conditioner adjustment instruction according to the priority order can help to ensure driving safety and comfort. When there are multiple adjustment instructions for the air conditioning control system at the same time, it is necessary to determine a target adjustment instruction from the at least one air conditioner adjustment instruction according to a predetermined priority order. That is, the target adjustment instruction is an air conditioner adjustment instruction with a highest current priority, which can satisfy a current main driving requirement for a user, to avoid a control logic conflict when multiple adjustment instructions are executed simultaneously, causing the air conditioning system to fail to operate normally. After determining the target adjustment instruction, the internal and external circulation mode of the air conditioner is adjusted based on the target adjustment instruction, to satisfy a demand of vehicle driving safety and comfort, improving driving experience of the user.

The at least one air conditioner adjustment instruction may include air conditioner adjustment instructions with the same instruction category, for example, a plurality of air conditioner adjustment instructions of the environment category. In this case, it is necessary to further determine a priority corresponding to each air conditioner adjustment instruction of the environment category, to determine a final target adjustment instruction. A specific method is described in detail through the following embodiments.

In some embodiments, as illustrated in FIG.2, the determining, based on the predetermined priority sequence corresponding to the instruction category, the target adjustment instruction from the at least one air conditioner adjustment instruction includes steps 202 to 206.

At step 202, a category priority corresponding to each of the at least one air conditioner adjustment instruction is determined based on a category priority sequence in the predetermined priority sequence. The instruction category in the category priority sequence is, in descending order, the safety category, the environment category, and the energy-saving category.

At step 204, in response to presence of a plurality of air conditioner adjustment instructions with the same category priority, an instruction priority of each of the plurality of air conditioner adjustment instructions with the same category priority is determined based on an instruction priority sequence in the predetermined priority sequence.

At step 206, an air conditioner adjustment instruction with a highest priority among all the air conditioner adjustment instructions is determined as the target adjustment instruction.

Specifically, the predetermined priority sequence includes a category priority sequence and an instruction priority sequence. The category priority sequence defines priorities corresponding to different instruction categories. The instruction priority sequence defines priorities corresponding to different instructions within the same instruction category. After generating the at least one air conditioner adjustment instruction, it is first necessary to determine the category priority corresponding to each air conditioner adjustment instruction. If there are air conditioner adjustment instructions with the same category priority, the instruction priority of each air conditioner adjustment instruction is then determined from the plurality of air conditioner adjustment instructions corresponding to the same category priority. Finally, the air conditioner adjustment instruction corresponding to a highest category priority and a highest instruction priority among the at least one air conditioner adjustment instruction is determined as the target adjustment instruction. The instruction category defined in the category priority sequence is, in descending order, the safety category, the environment category, and the energy-saving category. That is, the safety category is the first-level priority, the environment category is the second-level priority, and the energy-saving category is the third-level priority. If there are air conditioner adjustment instructions with the same category priority, a final target priority is determined according to an instruction priority corresponding to a corresponding instruction category. Exemplarily, if the instruction category of the at least one air conditioner adjustment instruction includes the safety category, the environment category, and the energy-saving category, the air conditioner adjustment instruction corresponding to the safety category is determined as a candidate adjustment instruction. If there is only one candidate adjustment instruction, the candidate adjustment instruction is the target adjustment instruction. If there are multiple candidate adjustment instructions, an instruction priority of each candidate adjustment instruction is determined, and the one candidate adjustment instruction with a highest instruction priority is determined as the target adjustment instruction. That is, if the target adjustment instruction may be directly determined based on the category priority, there is no need to determine the instruction priority. If the target adjustment instruction may not be directly determined based on the category priority, the target adjustment instruction needs to be determined based on the instruction priority. With the target adjustment instruction determination method of this embodiment, the target adjustment instruction can be quickly determined from the at least one air conditioner adjustment instruction, and the target adjustment instruction can be executed by the air conditioner control system in a timely manner, to quickly respond to an air conditioner usage requirement of the user during driving, improving the driving experience of the user.

Among the instruction categories, there are many types of air conditioner adjustment instructions corresponding to the environment category. Formulating an instruction priority sequence corresponding to the environment category can facilitate reasonable control of the air conditioner in a complex environment to ensure air quality inside the vehicle and physical and mental health of the user, which is described in detail through the following embodiments.

In some embodiments, the determining, in response to the presence of the plurality of air conditioner adjustment instructions with the same category priority, the instruction priority of each of the plurality of air conditioner adjustment instructions with the same category priority based on the instruction priority sequence in the predetermined priority sequence includes: determining, in response to the instruction category of each of the plurality of air conditioner adjustment instructions being the environment category, the instruction priority of each of the plurality of air conditioner adjustment instructions based on an instruction priority sequence corresponding to the environment category. An instruction in the instruction priority sequence corresponding to the environment category is, in descending order, a pollutant full internal circulation instruction, a full internal circulation instruction for car washing or window washing, and a ventilation external circulation instruction.

Specifically, if the instruction categories of the plurality of air conditioner adjustment instructions are the environment category, it is required to determine the instruction priority corresponding to each air conditioner adjustment instruction according to a pre-defined instruction priority sequence. Instructions of the environment category include the pollutant full internal circulation instruction, the full internal circulation instruction for car washing or window washing, and the ventilation external circulation instruction, whose corresponding instruction priorities are level A, level B, and level C, respectively. Level A has a highest priority, level B has a second highest, and level C has a lowest priority. The pollutant full internal circulation instruction means that when a concentration of an air pollutant outside the vehicle reaches a certain level, the external circulation needs to be disabled and the full internal circulation needs to be enabled, to prevent a pollutant from entering the vehicle through an external circulation passage and thus affecting the air quality inside the vehicle. An air pollutant outside the vehicle may cause harm to physical and mental health of the user inside the vehicle. Therefore, when a concentration of the air pollutant outside the vehicle exceeds a certain value, the external circulation needs to be disabled immediately. A priority of the pollutant full internal circulation instruction is set as the highest level A. The full internal circulation instruction for car washing or window washing means that the external circulation needs to be disabled under the car washing operating condition or the window washing operating condition. Under the car washing operating condition, due to a large water volume, enabling the external circulation tends to cause a large amount of water vapor to enter the vehicle through the external circulation passage, damaging an internal vehicle part and further affecting a service life of the vehicle. Therefore, it is necessary to disable the external circulation and enable the full internal circulation. Under the window washing operating condition, glass water used for window washing usually has pungent chemical odor, and thus the external circulation needs to be disabled and the internal circulation needs to be enabled to prevent unpleasant external odor from entering the vehicle. A priority of the full internal circulation instruction for car washing or window washing is level B. The ventilation external circulation instruction means that after the full internal circulation inside the vehicle is kept for a certain period of time, the external circulation needs to be enabled regularly for ventilation and air exchange to ensure the air quality inside the vehicle. Also, fresh air entering from the outside may keep the driver sober and thus improve driving safety. A priority of the ventilation external circulation instruction is level C.

Exemplarily, if the at least one air conditioner adjustment instruction includes instructions of the environment category and the energy-saving category, since the environment category is set as the second-level priority and the energy-saving category is set as the third-level priority, in this case, the air conditioner adjustment instruction corresponding to the environment category is determined as the candidate adjustment instruction. If there are multiple candidate adjustment instructions, the instruction priority of each candidate adjustment instruction is determined. If the candidate adjustment instruction is the pollutant full internal circulation instruction and the full internal circulation instruction for car washing or window washing, since the priority of the pollutant full internal circulation instruction is level A and the priority of the full internal circulation instruction for car washing or window washing is level B, the pollutant full internal circulation instruction is determined as the final target adjustment instruction. This embodiment can formulate a reasonable instruction priority for a complex driving environment, quickly determine the target adjustment instruction according to the instruction priority, make the air conditioner control system execute the target adjustment instruction in a timely manner, and rapidly respond to the air conditioner use demand of the user during driving. In this way, driving experience of the user can be improved.

The foregoing embodiments describe how to determine the target adjustment instruction after generating the at least one air conditioner adjustment instruction. How to generate the at least one air conditioner adjustment instruction is illustrated below through embodiments.

In some embodiments, the generating the at least one air conditioner adjustment instruction includes: obtaining vehicle information and/or environment information; and generating, based on the vehicle information and/or the environment information, the at least one air conditioner adjustment instruction.

Specifically, the vehicle information is information related to vehicle driving, which may be obtained from each controller or component on the vehicle. For example, the vehicle information includes a vehicle speed, an operating condition, and the like. The environment information includes an in-vehicle temperature and an out-of-vehicle temperature, humidity, a pollutant concentration, and the like, which may be obtained by various types of sensors arranged on the vehicle. The vehicle information and the environment information can represent a current driving state and an environment state of the vehicle. If the driving state and the environment state meet corresponding predetermined operating condition requirements, a corresponding air conditioner adjustment instruction is generated. The method for generating the air conditioner adjustment instruction in this embodiment can accurately generate an adjustment instruction to further adjust the air conditioner and meet a vehicle usage demand of the user.

A specific method for generating the air conditioner adjustment instruction is illustrated below through several embodiments.

In some embodiments, the vehicle information includes humidity on an inner surface of a front windshield of the vehicle and a surface temperature of the front windshield. The environment information includes an in-vehicle temperature. The air conditioner adjustment instruction includes a defrosting external circulation enabling instruction. The generating, based on the vehicle information and/or the environment information, the at least one air conditioner adjustment instruction includes: calculating a dew point based on the humidity on the inner surface of the front windshield and the in-vehicle temperature; determining a fogging risk level based on the surface temperature of the front windshield and the dew point; and generating, in response to the fogging risk level exceeding a predetermined level threshold, the defrosting external circulation enabling instruction. An external circulation air damper opening degree in the defrosting external circulation enabling instruction is positively correlated with the fogging risk level. The instruction category of the defrosting external circulation enabling instruction is the safety category.

This embodiment focuses on the defrosting external circulation enabling instruction, which corresponds to a defrosting operating condition. First, it is determined whether there is a risk of fogging on the front windshield of the vehicle based on the vehicle information. The humidity on the inner surface of the front windshield is obtained by the humidity sensor. The surface temperature of the front windshield and the in-vehicle temperature are obtained by the temperature sensor. The dew point is calculated based on the humidity on the inner surface of the front windshield and the in-vehicle temperature through Formulas (1) to (2): ${T}_{d} = \frac{bγ \left(T, RH\right)}{a - γ \left(T, RH\right)}$ (1) $γ \left(T, RH\right) = \frac{aT}{b + T} + In \left(RH/100\right)$ (2) where *T_{d}* denotes the dew point, ***T*** denotes the in-vehicle temperature, ***RH*** denotes the humidity on the inner surface of the front windshield, and a and b are constants. The fogging risk level is determined based on the surface temperature of the front windshield and the dew point. When the surface temperature of the front windshield is higher than a dew point temperature, the fogging risk level is no risk. When the surface temperature of the front windshield is equal to the dew point temperature, the fogging risk level is a low risk. When the surface temperature of the front windshield is lower than the dew point temperature, the fogging risk level is a high risk. The predetermined level threshold may be the low risk. In response to the fogging risk level exceeding the low risk, the defrosting external circulation enabling instruction is generated. The defrosting external circulation enabling instruction includes a target external circulation air damper opening degree. The current external circulation air damper opening degree is adjusted based on the target external circulation air damper opening degree. The external circulation air damper opening degree is positively correlated with the fogging risk level. That is, a higher fogging risk level corresponds to a larger external circulation air damper opening degree, and a lower fogging risk level corresponds to a smaller external circulation air damper opening degree. The external circulation air damper opening degree of the air conditioner is adjusted based on the fogging risk level, to prevent the front windshield of the vehicle from fogging and thus affecting the driving safety. Exemplarily, when the fogging risk level is the low risk, the external circulation air damper opening degree is increased by a first predetermined opening degree increment on the basis of a current opening degree of an external circulation air damper, for example, by 30% of the current opening degree of the external circulation air damper. When the fogging risk level is the high risk, the external circulation air damper is fully opened, to enable the full external circulation.

It should be noted that on the basis of the above three fogging risk levels, multiple risk levels may also be set between the low risk and the high risk by a difference method. For example, a medium risk level may be set. When the fogging risk level is the medium risk level, the external circulation air damper opening degree is increased by a second predetermined opening degree increment on the basis of the current opening degree of the external circulation air damper, for example, by 60% of the current opening degree of the external circulation air damper. By the method for controlling the air conditioner of this embodiment, fogging of the front windshield can be effectively prevented, avoiding affecting the driver's sight, and ensuring the driving safety.

In some embodiments, the environment information includes an out-of-vehicle pollutant concentration. The air conditioner adjustment instruction includes a pollutant full internal circulation instruction. The generating, based on the vehicle information and/or the environment information, the at least one air conditioner adjustment instruction includes: generating, in response to the out-of-vehicle pollutant concentration exceeding a predetermined concentration threshold, the pollutant full internal circulation instruction. The pollutant full internal circulation instruction is configured to switch a current internal and external circulation mode of the air conditioner to a full internal circulation mode of the air conditioner. An instruction category of the pollutant full internal circulation instruction is the environment category.

This embodiment focuses on the pollutant full internal circulation instruction, which corresponds to an out-of-vehicle pollutant operating condition. An out-of-vehicle pollutant may include harmful substances such as sulfur oxides, nitrogen oxides. The out-of-vehicle pollutant concentration may be detected by a sensor mounted on an exterior of the vehicle. For example, a concentration of sulfur oxides can be detected via a sulfur oxide sensor. A concentration of nitrogen oxides can be detected via a nitrogen oxide sensor. When the out-of-vehicle pollutant concentration exceeds the predetermined concentration threshold, it indicates that the out-of-vehicle pollutant concentration is too high, and thus it is necessary to immediately disable the external circulation and generate the pollutant full internal circulation instruction to control the air conditioner controller to disable the external circulation and enable the full internal circulation. Exemplarily, the predetermined concentration threshold may be 500 PPM.

In addition, when the out-of-vehicle pollutant concentration exceeds the predetermined concentration threshold, the external circulation may be appropriately enabled to meet a demand for ventilation and air exchange inside the vehicle. In response to the out-of-vehicle pollutant concentration being smaller than or equal to a minimum concentration threshold, the internal and external circulation mode of the air conditioner is switched to the full external circulation. Exemplarily, the minimum concentration threshold may be 200 PPM. When the out-of-vehicle pollutant concentration is smaller than or equal to 200 PPM, human health may not be affected, and the full external circulation may be enabled to ensure a ventilation rate inside the vehicle. In response to the out-of-vehicle pollutant concentration being between the minimum concentration threshold and the predetermined concentration threshold, the external circulation air damper opening degree and the internal circulation air damper opening degree may be proportionally adjusted according to a predetermined concentration adjustment rule. The predetermined concentration adjustment rule calibrates a correspondence between the out-of-vehicle pollutant concentration and the external circulation air damper opening degree and the internal circulation air damper opening degree. A higher out-of-vehicle pollutant concentration corresponds to a smaller external circulation air damper opening degree, to prevent the out-of-vehicle pollutant from entering the vehicle and affecting the air quality inside the vehicle, and this case corresponds to a larger internal circulation air damper opening degree, to ensure air circulation inside the vehicle. A lower out-of-vehicle pollutant concentration corresponds to a larger the external circulation air damper opening degree, guaranteeing a demand for ventilation rate inside the vehicle, and this case corresponds to a smaller internal circulation air damper opening degree, to primarily rely on the external circulation to ensure the air circulation inside the vehicle. Through the air conditioner control method of this embodiment, it is possible to ensure a ventilation demand inside the vehicle while ensuring the air quality inside the vehicle. When the out-of-vehicle pollutant concentration exceeds the standard, the external circulation is immediately disabled to ensure physical and mental health of the occupant inside the vehicle, improving driving comfort.

In addition to controlling the air conditioner based on the out-of-vehicle pollutant concentration, the air conditioner may also be controlled based on congestion of the vehicle to ensure the air quality inside the vehicle.

In some embodiments, the method for controlling an air conditioner of a vehicle further includes: switching the internal and external circulation mode of the air conditioner to the full external circulation, in response to a current vehicle speed exceeding a second predetermined vehicle speed, or no other vehicle being present within a predetermined range in front of the vehicle. The second predetermined vehicle speed is smaller than a first predetermined vehicle speed.

This embodiment focuses on a congested traffic condition. Distribution of the vehicles within the predetermined range in front of the vehicle may be determined based on an image obtained by a camera arranged at a front of the vehicle. When severe congestion occurs, a large amount of exhaust gas may exist around the vehicle, resulting in poor air quality. In this case, it is necessary to disable the external circulation to prevent external air from entering the vehicle and affecting the air quality inside the vehicle. When no severe congestion occurs, the external circulation may be appropriately enabled to meet the ventilation demand inside the vehicle. Exemplarily, the second predetermined vehicle speed may be 20 km/h. The predetermined range may be a circle with the vehicle as a center and a radius of 10 m. When the current vehicle speed exceeds the second predetermined vehicle speed and no other vehicle is present within the predetermined range, it may be determined that the current traffic is not congested or the congestion is not severe. The internal and external circulation mode of the air conditioner is switched to the full external circulation. That is, the internal circulation is disabled, and the external circulation air damper opening degree is adjusted to a maximum value, to perform air exchange with an interior of the vehicle at a fastest rate. Exemplarily, when the current vehicle speed does not exceed the second predetermined vehicle speed and other vehicles are present within the predetermined range in front of the vehicle, it may be determined that the current traffic is severely congested, and it is necessary to disable the external circulation to prevent the external air from entering the vehicle. When the current vehicle speed is between the first predetermined vehicle speed and the second predetermined vehicle speed, the external circulation mode may be adjusted proportionally. A corresponding external circulation air damper opening degree is determined based on the current vehicle speed. The vehicle speed is positively correlated with the external circulation air damper opening degree. When the vehicle speed is lower than the second predetermined vehicle speed, a higher vehicle speed corresponds to a larger external circulation air damper opening degree, to quickly achieve ventilation and air exchange and ensure good air quality inside the vehicle. With the method for controlling an air conditioner of a vehicle according to this embodiment, the external circulation air damper opening degree can be appropriately adjusted under a congested condition. An air circulation rate inside the vehicle can be appropriately increased on the premise of ensuring the air quality inside the vehicle, to realize rapid ventilation and air exchange, bringing a good driving experience to the user.

In some embodiments, the vehicle information includes a current operating condition. The air conditioner adjustment instruction includes a full internal circulation instruction for car washing or window washing. The generating, based on the vehicle information and/or the environment information, the at least one air conditioner adjustment instruction includes: generating, in response to the current operating condition being a car washing operating condition or a window washing operating condition, the full internal circulation instruction for car washing or window washing. The full internal circulation instruction for car washing or window washing is configured to switch a current internal and external circulation mode of the air conditioner to a full internal circulation mode of the air conditioner. An instruction category of the full internal circulation instruction for car washing or window washing is the environment category.

This embodiment focuses on the full internal circulation instruction for car washing or window washing. If the current operating condition is the car washing operating condition or the window washing operating condition, the full internal circulation instruction for car washing or window washing is generated. The window washing operating condition refers to spraying glass water on an outer side of the front windshield for cleaning the front windshield. Usually, some chemical reagents harmful to the human body are added to the glass water. The chemical reagents usually have a certain pungent odor. To prevent the odor of the chemical reagents from entering the vehicle under the window washing operating condition and affecting health status of the occupant inside the vehicle, the external circulation air damper opening degree is adjusted to zero. That is, the external circulation is disabled, to prevent an external odor from entering the vehicle through the external circulation passage, ensuring that the air quality inside the vehicle is not affected, and improving the driving experience of the driver.

Under the window washing operating condition, after the external circulation air damper of the air conditioner is closed, the pungent odor of the chemical reagents can be isolated. When the external odor dissipates, the external circulation air damper may be opened to continue meeting the demand of ventilation and air exchange inside the vehicle. Therefore, in some embodiments, the method for controlling the air conditioner of the vehicle further includes: in response to a duration during which the external circulation air damper opening degree remains zero exceeding a predetermined duration, restoring the external circulation air damper opening degree to a target opening degree. Exemplarily, the predetermined duration may be 1 minute. After a duration during which the external circulation air damper is completely closed exceeds 1 minute, the external circulation air damper is reopened, and the external circulation air damper opening degree is restored to the target opening degree. The target opening degree is an opening degree adjusted based on the current water vapor content for the external circulation air damper opening degree.

When it is detected that the current operating condition is the car washing operating condition, in addition to closing a vehicle window, the external circulation air damper also needs to be closed to prevent water from entering the vehicle through the external circulation passage. The external circulation air damper opening degree of the air conditioner is reduced from the current opening degree of the external circulation air damper to zero. That is, the external circulation is disabled, to prevent a large amount of water from entering the vehicle and damaging the internal vehicle part. The solution of this embodiment is suitable for implementation when the vehicle is not powered off. For example, when the driver performs automatic car washing inside the vehicle, closing a vehicle door and the vehicle window while disabling the external circulation can effectively prevent the water from entering the vehicle.

In some embodiments, the vehicle information includes an air outlet temperature of the air conditioner. The air conditioner adjustment instruction includes a ventilation external circulation instruction. The generating, based on the vehicle information and/or the environment information, the at least one air conditioner adjustment instruction includes: generating the ventilation external circulation instruction in response to a current internal and external circulation mode of the air conditioner being a full internal circulation mode and a duration of the full internal circulation mode exceeding a first predetermined duration threshold. The ventilation external circulation instruction is configured to switch the current internal and external circulation mode from the full internal circulation mode to a full external circulation mode. An instruction category of the ventilation external circulation instruction is the environment category.

Specifically, when the current internal and external circulation mode of the air conditioner is switched to the full internal circulation mode, a timer is started to count time. When the duration exceeds the first predetermined duration, the mode is switched to the full external circulation mode to start ventilation and air exchange, and the timer is reset to zero and restarted to count time. If a duration of the external circulation exceeds the second predetermined duration, the mode is switched to the full internal circulation mode, and the timer is reset to zero and restarted to count time. If the duration of the external circulation does not exceed the second predetermined duration and a variation in the air outlet temperature of the air conditioner exceeds a predetermined temperature difference, the current internal and external circulation mode of the air conditioner is switched to the full internal circulation mode, and the timer is reset to zero and restarted to count time. The fact that the variation in the air outlet temperature of the air conditioner exceeds the predetermined temperature difference indicates that there is a large temperature difference between inside of the vehicle and outside of the vehicle. To prevent an energy consumption loss caused by a loss of air inside the vehicle, the current internal and external circulation mode of the air conditioner is switched to the full internal circulation mode in a timely manner to avoid a further loss of air inside the vehicle. Exemplarily, the first predetermined duration is 15 minutes, the second predetermined duration is 15 seconds, and the predetermined temperature difference is 6°C. The air conditioner control method of this embodiment can ensure that good air quality inside the vehicle is maintained. Enabling the external circulation for a certain period of time can increase an oxygen content inside the vehicle, keeping the driver sober, and improving the driving safety.

In some embodiments, the vehicle information includes a current internal and external circulation mode of the air conditioner and a current control mode of the air conditioner, the environment information includes an in-vehicle temperature and an out-of-vehicle temperature, and the air conditioner adjustment instruction includes an energy-saving full internal circulation enabling instruction. The generating, based on the vehicle information and/or the environment information, the at least one air conditioner adjustment instruction includes: generating the energy-saving full internal circulation enabling instruction in response to the current control mode of the air conditioner being a heating mode and the current internal and external circulation mode of the air conditioner being an automatic mode, or the current control mode of the air conditioner being a ventilation mode and the current internal and external circulation mode of the air conditioner being the automatic mode, or the current control mode of the air conditioner being a cooling mode and the in-vehicle temperature being lower than or equal to the out-of-vehicle temperature. The energy-saving full internal circulation enabling instruction is configured to switch the current internal and external circulation mode of the air conditioner to a full internal circulation mode, and an instruction category of the energy-saving full internal circulation enabling instruction is the energy-saving category.

This embodiment focuses on the energy-saving full internal circulation enabling instruction. Usually, enabling the internal circulation consumes less energy than enabling the external circulation, which can effectively save vehicle energy consumption and improve a driving range of the vehicle. Enabling the energy-saving full internal circulation enabling instruction needs to meet a predetermined condition, which includes: the current control mode of the air conditioner being the heating mode and the current internal and external circulation mode of the air conditioner being the automatic mode; the current control mode of the air conditioner being the ventilation mode and the current internal and external circulation mode of the air conditioner being the automatic mode; or the current control mode of the air conditioner being the cooling mode and the in-vehicle temperature being lower than or equal to the out-of-vehicle temperature.

If the current control mode of the air conditioner is the heating mode and the current internal and external circulation mode of the air conditioner is the automatic mode, adjusting the internal and external circulation mode of the air conditioner to the full internal circulation mode can minimize a loss of hot air inside the vehicle and quickly increase a temperature inside the vehicle to meet a user demand. If the current control mode of the air conditioner is the ventilation mode and the current internal and external circulation mode of the air conditioner is the automatic mode, adjusting the internal and external circulation mode of the air conditioner to the full internal circulation mode can realize air flow inside the vehicle through the internal circulation. The full internal circulation is more energy-efficient than the full external circulation, effectively reducing the vehicle energy consumption. If the current control mode of the air conditioner is the cooling mode and the in-vehicle temperature is lower than or equal to the out-of-vehicle temperature, the internal and external circulation mode of the air conditioner is adjusted to the full internal circulation mode to prevent a loss of cold air caused by loss of air inside the vehicle to the outside. Enabling the full internal circulation can improve a cooling efficiency of the air inside the vehicle, quickly reaching a temperature required by the driver.

In addition, if the current control mode of the air conditioner is the heating mode and the internal and external circulation mode set by the driver is the external circulation mode, under a current external circulation mode, the internal circulation air damper opening degree is adjusted to a maximum value to reduce a loss of hot air inside the vehicle, so that the temperature inside the vehicle can quickly rise to the temperature required by the driver. If the current control mode of the air conditioner is the ventilation mode and the current internal and external circulation mode is predetermined to the external circulation mode, the internal and external circulation mode of the air conditioner is adjusted to the full external circulation mode to complete the air exchange inside the vehicle at the fastest rate and improve the air quality inside the vehicle. If the current control mode of the air conditioner is the cooling mode, the in-vehicle temperature and the out-of-vehicle temperature also need to be considered in this case. If the in-vehicle temperature is higher than the out-of-vehicle temperature, the internal and external circulation mode of the air conditioner is adjusted to the full external circulation mode, allowing a large amount of cold air outside the vehicle to enter the vehicle, which can accelerate the cooling efficiency of the air inside the vehicle, save energy, and reduce a load of the air conditioner. The method for controlling the air conditioner of the vehicle in this embodiment can further reduce the vehicle energy consumption and improve the driving comfort while being capable to quickly meet a demand of the driver for in-vehicle temperature and air quality through fine adjustment of the internal and external circulation mode of the air conditioner.

To further improve comfort of vehicle driving, before the driver uses the vehicle, the air conditioner may be remotely started to adjust the internal and external circulation mode of the air conditioner according to an actual demand of the driver. A specific adjustment method is described through the following embodiments.

In some embodiments, the method for controlling the air conditioner of the vehicle further includes: obtaining a current control mode of the air conditioner; in response to the current control mode being the heating mode, adjusting the internal and external circulation mode of the air conditioner to the full internal circulation; in response to the current control mode being the ventilation mode, adjusting the internal and external circulation mode of the air conditioner to the full external circulation; in response to the current control mode being the cooling mode and the in-vehicle temperature being higher than the out-of-vehicle temperature, adjusting the internal and external circulation mode of the air conditioner to the full external circulation; and in response to the current control mode being the cooling mode and the in-vehicle temperature being lower than or equal to the out-of-vehicle temperature, adjusting the internal and external circulation mode of the air conditioner to the full internal circulation.

Specifically, the air conditioner can be remotely started or scheduled by the driver before using the vehicle, so that the in-vehicle temperature or the air quality can meet the demand of the driver when using the vehicle. If an air conditioner control mode remotely selected by the driver is the heating mode, to meet the in-vehicle temperature demand as soon as possible on the premise of energy saving, the external circulation of the air conditioner is disabled and the full internal circulation is enabled, to prevent an in-vehicle air from being lost to the outside during the heating and causing a heat loss. If the air conditioner control mode remotely selected by the driver is the ventilation mode, to quickly perform air exchange with the in-vehicle air, the internal circulation of the air conditioner is disabled and the full external circulation is enabled, to accelerate an exchange speed between the in-vehicle air and out-of-vehicle air. If the air conditioner control mode remotely selected by the driver is the cooling mode, the in-vehicle temperature and the out-of-vehicle temperature also need to be considered in this case. If the in-vehicle temperature is higher than the out-of-vehicle temperature, the internal and external circulation mode of the air conditioner is adjusted to the full external circulation mode, allowing a large amount of the cold air outside the vehicle to enter the vehicle, which can accelerate the cooling efficiency of the in-vehicle air, save energy, and reduce the load of the air conditioner. If the in-vehicle temperature is lower than the out-of-vehicle temperature, the internal and external circulation mode of the air conditioner is adjusted to the full internal circulation mode to prevent the in-vehicle air from being lost to the outside and causing the cold air loss. Enabling the full internal circulation can improve the cooling efficiency of the in-vehicle air, quickly reaching the temperature required by the driver. On the premise of ensuring energy saving, the method for controlling the air conditioner of the vehicle in this embodiment can quickly meet the demand of the driver for the in-vehicle temperature and the air quality, improving the driving comfort.

During the driving of the vehicle, if it rains, the driver usually closes the window and a sunroof to prevent the water from entering the vehicle, but does not perform targeted adjustment on the internal and external circulation mode of the air conditioner. If the current water vapor content is high and the external circulation air damper opening degree of the air conditioner is also large, water vapor outside the vehicle may enter the vehicle through the external circulation passage, causing certain damage to performance of the part inside the vehicle. If the current water vapor content is low and the external circulation of the air conditioner is disabled, the demand for ventilation and air exchange cannot be met, and the air quality inside the vehicle cannot be guaranteed. In view of this, the present disclosure provides a method for controlling the air conditioner of the vehicle, which can prevent excessive water vapor from entering the vehicle while ensuring ventilation and air exchange of the vehicle. Therefore, not only the air quality inside the vehicle can be ensured, but also damage to the performance of the part of the vehicle caused by the water vapor can be avoided.

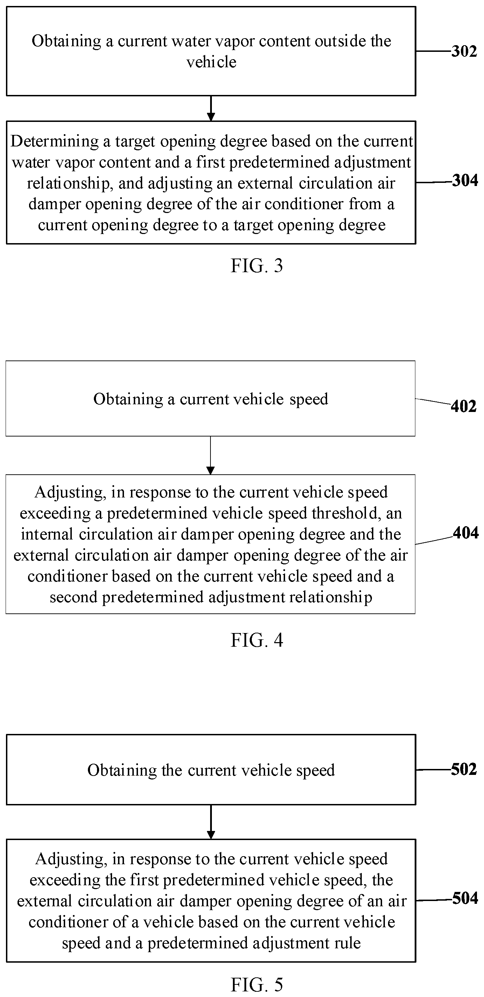

The present disclosure provides the method for controlling the air conditioner of the vehicle applied to the vehicle control unit. As illustrated in FIG. 3, a specific method includes steps 302 and 304.

At step 302, a current water vapor content outside the vehicle is obtained.

The current water vapor content is a ratio of a mass of water vapor in the humid air to a total mass of the humid air in the environment outside the vehicle. The current water vapor content may be collected by a water vapor detection sensor disposed outside the vehicle. Whether it is currently rainy weather or whether air humidity in a current road section is high may be determined based on the current water vapor content.

At step 304, a target opening degree is determined based on the current water vapor content and a first predetermined adjustment relationship. The external circulation air damper opening degree of the air conditioner is adjusted from the current opening degree of the external circulation air damper to the target opening degree. The current water vapor content is negatively correlated with the target opening degree in the first predetermined adjustment relationship.

Specifically, when the current water vapor content exceeds a minimum limit value, it may be considered that the current operating condition is a rainy operating condition or current air humidity is relatively high. The first predetermined adjustment relationship pre-calibrates a corresponding relationship between the water vapor content and the external circulation air damper opening degree. A higher current water vapor content corresponds to a smaller external circulation air damper opening degree. When the current water vapor content is high, the external circulation air damper opening degree is small, which can effectively prevent external water vapor of the vehicle from entering the vehicle through the external circulation passage. When the current water vapor content is low, on the premise of preventing the external water vapor from entering the vehicle, the external circulation air damper opening degree is appropriately increased to allow more external air to enter the vehicle, to improve a ventilation and air exchange efficiency and the air quality inside the vehicle. After the current water vapor content is determined, the target opening degree corresponding to the current water vapor content may be determined according to the first predetermined adjustment relationship. The target opening degree is an expected external circulation air damper opening degree under the current water vapor content. The external circulation air damper opening degree of the air conditioner is adjusted from the current opening degree of the external circulation air damper to the target opening degree, to realize flexible adjustment of an external circulation state of the air conditioner.

Based on the above step 302 to step 304, the method for controlling the air conditioner of the vehicle according to this embodiment includes: obtaining the current water vapor content outside the vehicle; and determining the corresponding target opening degree based on the current water vapor content and the first predetermined adjustment relationship. Different current water vapor contents correspond to different target opening degrees. The current water vapor content is negatively correlated with the target opening degree. A higher current water vapor content corresponds to a smaller target opening degree, which can effectively prevent a large amount of water vapor from entering the vehicle on the basis of meeting the demand of ventilation and air exchange. A lower current water vapor content corresponds to a larger target opening degree, which can maximize a ventilation and air exchange volume and improve the air quality inside the vehicle while preventing the water vapor from entering the vehicle. After the target opening degree is determined, the external circulation air damper opening degree of the air conditioner is adjusted from the current opening degree of the external circulation air damper to the target opening degree, achieving the purpose of flexibly adjusting the external circulation air damper opening degree of the air conditioner. In the present disclosure, excessive water vapor entering the vehicle can be avoided while ensuring continuous ventilation and air exchange for the vehicle, guaranteeing the air quality inside the vehicle, and preventing damage to the performance of the part of the vehicle caused by incoming water vapor.

Further, after the external circulation air damper opening degree of the air conditioner is controlled based on different water vapor contents through the above embodiments, fine control can also be performed on the internal and external circulation mode of the air conditioner in combination with the current vehicle speed. The internal and external circulation of the air conditioner is effectively utilized to improve driving safety of the vehicle, reduce the load of the air conditioner, and increase the driving range of the vehicle.

In some embodiments, as illustrated in FIG. 4, the method for controlling the air conditioner of the vehicle further includes steps 402 to 404.

At step 402, the current vehicle speed of the vehicle is obtained.

At step 404, in response to the current vehicle speed exceeding a predetermined vehicle speed threshold, the internal circulation air damper opening degree and the external circulation air damper opening degree of the air conditioner are adjusted based on the current vehicle speed and a second predetermined adjustment relationship. In the second predetermined adjustment relationship, the current vehicle speed is positively correlated with the internal circulation air damper opening degree, and the current vehicle speed is negatively correlated with the external circulation air damper opening degree.

Specifically, the predetermined vehicle speed threshold represents a minimum vehicle speed at which the internal and external circulation mode of the air conditioner needs to be adjusted based on the vehicle speed. The second predetermined adjustment relationship calibrates a corresponding relationship between the vehicle speed, the internal circulation air damper opening degree, and the external circulation air damper opening degree. A higher vehicle speed corresponds to a larger internal circulation air damper opening degree and a smaller external circulation air damper opening degree. This is because when the vehicle speed increases, with the external circulation enabled, more fresh air enters the vehicle, and thus the air inside the vehicle is lost to the outside accordingly. If the air conditioner is in the cooling mode or the heating mode, a certain energy consumption loss may occur. Therefore, it is necessary to reduce the external circulation air damper opening degree. Also, increasing the internal circulation air damper opening degree can reduce the load of the air conditioner, achieving energy-saving, and further improving the driving range of the vehicle.

It should be noted that an internal circulation air damper and an external circulation air damper of the air conditioner in this embodiment are controlled independently. Adjustment to the internal circulation air damper opening degree does not affect the external circulation air damper opening degree. Adjustment to the external circulation air damper opening degree does not affect the internal circulation air damper opening degree.

It should be noted that, on the basis of adjusting the external circulation air damper opening degree based on the current water vapor content, to avoid destroying a slight positive pressure state inside the vehicle, it is necessary to maintain a certain external circulation air damper opening degree, which is described in detail through the following embodiments.

In some embodiments, the external circulation air damper opening degree is greater than a predetermined minimum opening degree threshold.

Specifically, as the vehicle speed increases, a pressure inside the vehicle increases, breaking the slight positive pressure state inside the vehicle. In addition, fine dust particles outside the vehicle are likely to enter the vehicle, thereby affecting cleanliness of the air inside the vehicle. The slight positive pressure refers to a state in which an air supply volume entering the vehicle is set to be about 10% greater than an exhaust air volume by an air pressure difference, and discharging polluted air to the outside through purified fresh air, which is conducive to maintaining cleanliness inside the vehicle. To maintain the slight positive pressure state inside the vehicle, it is necessary to maintain a certain external circulation air damper opening degree. The predetermined minimum opening degree threshold represents a minimum external circulation air damper opening degree that can maintain the slight positive pressure state. When the external circulation air damper opening degree of the air conditioner is greater than the minimum opening degree threshold, the slight positive pressure state inside the vehicle can always be ensured. Exemplarily, the predetermined minimum opening degree threshold may be 1%.

The foregoing embodiments describe how to adjust the internal and external circulation mode of the air conditioner after the current vehicle speed exceeds the predetermined vehicle speed threshold. If the current vehicle speed does not exceed the predetermined vehicle speed threshold, the internal and external circulation mode of the air conditioner is adjusted through the following embodiments.

In some embodiments, the method for controlling the air conditioner of the vehicle further includes: in response to the current vehicle speed not exceeding the predetermined vehicle speed threshold, restoring the external circulation air damper opening degree to an opening degree before the target opening degree.

Exemplarily, the predetermined vehicle speed threshold may be 10 km/h. If the current vehicle speed does not exceed the predetermined vehicle speed threshold, it indicates that the current vehicle speed is low. Rainfall and the vehicle speed have little impact on an in-vehicle environment. There is no need to adjust the internal and external circulation mode of the air conditioner, as long as a current state of the air conditioner is maintained. The opening degree before the target opening degree is an external circulation air damper opening degree of the air conditioner before the external circulation air damper opening degree of the air conditioner is adjusted based on the current water vapor content. Exemplarily, if the current damper opening degree is 60%, and if the external circulation air damper opening degree is reduced to 30% based on the current water vapor content when the current water vapor content is high, then the current vehicle speed is determined. If the current vehicle speed is low, the external circulation air damper opening degree is restored to 60%, to increase a ventilation and air exchange rate and improve the air quality inside the vehicle.

A method for adjusting the internal and external circulation mode of the air conditioner under the window washing operating condition is described through the following embodiments.

In some embodiments, the method for controlling the air conditioner of the vehicle further includes: obtaining a current operating condition of the vehicle; and in response to the current operating condition being the window washing operating condition, reducing the external circulation air damper opening degree of the air conditioner to zero.

Specifically, since a driving scenario and road conditions of the vehicle are relatively complex, the vehicle involves various operating conditions during driving. Different control strategies may be adopted based on different operating conditions to ensure stability and comfort of the vehicle, improving the driving experience of the driver. The window washing operating condition refers to spraying glass water on the outer side of the front windshield to clean the front windshield. Usually, some chemical reagents that are harmful to the human body are added to the glass water. The chemical reagents usually have a certain pungent odor. To prevent the odor of chemical reagents from entering the vehicle under the window washing operating condition and affecting the health status of the occupant in the vehicle, the external circulation air damper opening degree is adjusted to zero. That is, the external circulation is disabled to prevent the external odor from entering the vehicle through the external circulation passage, ensuring that the air quality inside the vehicle is not affected, and improving the driving experience of the driver.

When the external circulation air damper of the air conditioner is closed under the window washing operating condition, the pungent odor of the chemical reagents may be isolated. After the external odor dissipates, the external circulation air damper may be opened to continue meeting the demand of ventilation and air exchange inside the vehicle. Therefore, in some embodiments, the method for controlling the air conditioner of the vehicle further includes: in response to the duration during which the external circulation air damper opening degree remains zero exceeding the predetermined duration, restoring the external circulation air damper opening degree to the target opening degree. Exemplarily, the predetermined duration may be 1 minute. After the duration during which the external circulation air damper is completely closed exceeds 1 minute, the external circulation air damper is reopened, and the external circulation air damper opening degree is restored to the target opening degree. The target opening degree is the opening degree adjusted based on the current water vapor content for the external circulation air damper opening degree.

In addition to the window washing operating condition described in the foregoing embodiments, the present disclosure further includes the car washing operating condition. A method for adjusting the internal and external circulation mode of the air conditioner under the car washing operating condition is described through the following embodiments.

In some embodiments, the method for controlling the air conditioner of the vehicle further includes: obtaining a current operating condition of the vehicle; and in response to the current operating condition being the car washing operating condition, reducing the external circulation air damper opening degree of the air conditioner to zero.

Specifically, when it is detected that the current operating condition is the car washing operating condition, in addition to closing the vehicle window, the external circulation air damper also needs to be closed to prevent the water from entering the vehicle through the external circulation passage. The external circulation air damper opening degree of the air conditioner is reduced from the current opening degree of the external circulation air damper to zero. That is, the external circulation is disabled, to prevent a large amount of water from entering the vehicle and damaging the internal vehicle part. The solution of this embodiment is suitable for implementation when the vehicle is not powered off. For example, when the driver performs automatic car washing inside the vehicle, closing the vehicle door and the vehicle window while closing the external circulation can effectively prevent the water from entering the vehicle.

During the driving of the vehicle, if the vehicle speed is high, when a certain degree of external circulation is enabled in the vehicle, compared with a case when the vehicle speed is low, an amount of air entering the vehicle from the outside increases, and then an amount of air squeezed out from the vehicle increases, resulting in a loss of part of the in-vehicle air. When the air conditioner is in the cooling mode or the heating mode, the loss of in-vehicle air may cause a part of an energy loss, thereby increasing the load of the air conditioner and energy consumption. Also, a large amount of external air enters the vehicle, and fine dust particles carried by the external air have some impact on the cleanliness of the in-vehicle air, resulting in a decrease in the cleanliness inside the vehicle and affecting the driving comfort of the vehicle. In view of this, the present disclosure provides the method for controlling the air conditioner of the vehicle, which can avoid a decline of air quality inside the vehicle while reducing the energy consumption of the air conditioner.

The present disclosure provides the method for controlling the air conditioner of the vehicle. As illustrated in FIG. 5, the method includes steps 502 and 504.

At step 502, the current vehicle speed of the vehicle is obtained.

Specifically, during the driving of the vehicle, when the vehicle speed changes, a flow velocity of air outside the vehicle changes accordingly, which may in turn affect an air intake volume and an air outlet volume of the air conditioner. Changes in the air intake volume and the air outlet volume may have some impact on a heating or cooling efficiency of the air conditioner. Therefore, when determining whether it is necessary to adjust the internal and external circulation mode of the air conditioner, it is necessary to make the determination in combination with the current vehicle speed, to appropriately adjust the internal and external circulation mode of the air conditioner.

At step 504, in response to the current vehicle speed exceeding the first predetermined vehicle speed, the external circulation air damper opening degree of the air conditioner of the vehicle is adjusted based on the current vehicle speed and the predetermined adjustment rule. In the predetermined adjustment rule, the current vehicle speed is negatively correlated with the external circulation air damper opening degree of the air conditioner.

Specifically, the first predetermined vehicle speed represents the minimum vehicle speed at which the external circulation air damper opening degree of the air conditioner needs to be adjusted. When the vehicle speed reaches the first predetermined vehicle speed, a pressure of an external airflow may affect air flow inside the vehicle. Exemplarily, the first predetermined vehicle speed may be 60 km/h. If the current vehicle speed exceeds the first predetermined vehicle speed, it indicates that the external circulation air damper opening degree of the air conditioner needs to be adjusted in combination with the current vehicle speed, to avoid affecting an efficiency of the air conditioner and the in-vehicle environment. The predetermined adjustment rule calibrates the corresponding relationship between the vehicle speed and the external circulation air damper opening degree of the air conditioner. The vehicle speed is in one-to-one correspondence with the external circulation air damper opening degree of the air conditioner. Once the current vehicle speed is determined, a unique external circulation air damper opening degree of the air conditioner may be determined through the predetermined adjustment rule. The vehicle speed is negatively correlated with the external circulation air damper opening degree of the air conditioner. That is, a higher vehicle speed corresponds to a smaller external circulation air damper opening degree of the air conditioner. A lower vehicle speed corresponds to a larger external circulation air damper opening degree of the air conditioner. When the external circulation air damper is opened, the higher the vehicle speed, the more external air enters the vehicle via an air inlet of the air conditioner, and the more air is squeezed out of the vehicle, resulting in an increased loss of in-vehicle air and increased energy consumption accordingly. If the current mode of the air conditioner is the cooling mode or the heating mode, the loss of in-vehicle air may lead to an increase in the load of the air conditioner and a decrease in the cooling or heating efficiency of the air conditioner. Therefore, the external circulation air damper opening degree needs to be lowered to reduce an amount of external air entering the vehicle, avoiding an energy consumption loss and affecting the driving range of the vehicle. Also, since there is a small amount of external air entering the vehicle, fewer fine dust particles carried by the external air enter the vehicle, which is conducive to maintaining the cleanliness inside the vehicle.

Based on the above step 502 to step 504, with the method for controlling the air conditioner of the vehicle according to this embodiment, the current vehicle speed can be obtained. In response to the current vehicle speed exceeding the first predetermined vehicle speed, which indicates that the external circulation of the air conditioner needs to be adjusted based on the current vehicle speed, the external circulation air damper opening degree of the air conditioner of the vehicle is adjusted based on the current vehicle speed and the predetermined adjustment rule. The current vehicle speed is negatively correlated with the external circulation air damper opening degree of the air conditioner. That is, the higher the current vehicle speed, the more external air enters the vehicle, and the more air flows out of the vehicle. To reduce the loss of in-vehicle air, the external circulation air damper opening degree of the air conditioner is reduced, thereby reducing the energy consumption loss caused by loss of in-vehicle air to the outside of the vehicle. Also, lowering the external circulation air damper opening degree of the air conditioner can also reduce an amount of air entering the vehicle from the outside of the vehicle, preventing fine dust particles carried by the air outside the vehicle from affecting the cleanliness of the air inside the vehicle, to ensure the air quality inside the vehicle.

It should be noted that the method in the embodiments of the present disclosure may be performed by a single device, such as a computer or a server. The method in this embodiment may also be applied to a distributed scenario, and is completed by multiple devices in cooperation with each other. In such a distributed scenario, one of the multiple devices may only perform one or more steps of the method in the embodiments of the present disclosure, and the multiple devices interact with each other to complete the method.

It should be noted that the foregoing describes some embodiments of the present disclosure. Other embodiments are within the scope of the appended claims. In some cases, the actions or steps recited in the claims may be performed in an order different from that described in the embodiments and still achieve a desired result. In addition, the processes described in the accompanying drawings do not necessarily require the specific order or consecutive order shown to achieve the desired result. In some embodiments, multitasking and parallel processing may also be possible or advantageous.

Based on the same inventive concept, corresponding to the method of any of the above embodiments, the present disclosure further provides an apparatus for controlling an air conditioner of a vehicle.

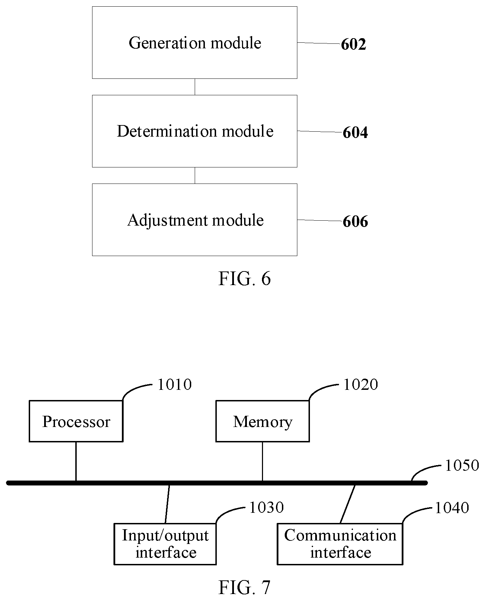

As illustrated in FIG. 6, the apparatus for controlling the air conditioner of the vehicle includes: a generation module 602 configured to generate at least one air conditioner adjustment instruction, where an instruction category of the at least one air conditioner adjustment instruction includes at least one of a safety category, an environment category, and an energy-saving category; a determination module 604 configured to determine, based on a predetermined priority sequence corresponding to the instruction category, a target adjustment instruction from the at least one air conditioner adjustment instruction; and an adjustment module 606 configured to adjust, based on the target adjustment instruction, an internal and external circulation mode of the air conditioner.

In some embodiments, the determination module 604 is further configured to: determine a category priority corresponding to each of the at least one air conditioner adjustment instruction based on a category priority sequence in the predetermined priority sequence, where the instruction category in the category priority sequence is, in descending order, the safety category, the environment category, and the energy-saving category; determine, in response to presence of a plurality of air conditioner adjustment instructions with the same category priority, an instruction priority of each of the plurality of air conditioner adjustment instructions with the same category priority based on an instruction priority sequence in the predetermined priority sequence; and determine an air conditioner adjustment instruction with a highest priority among all the air conditioner adjustment instructions as the target adjustment instruction.

In some embodiments, the determination module 604 is further configured to determine, in response to the instruction category of each of the plurality of air conditioner adjustment instructions being the environment category, the instruction priority of each of the plurality of air conditioner adjustment instructions based on an instruction priority sequence corresponding to the environment category, where an instruction in the instruction priority sequence corresponding to the environment category is, in descending order, a pollutant full internal circulation instruction, a full internal circulation instruction for car washing or window washing, and a ventilation external circulation instruction.

In some embodiments, the generation module 602 is further configured to: obtain vehicle information and/or environment information; and generate, based on the vehicle information and/or the environment information, the at least one air conditioner adjustment instruction.

In some embodiments, the vehicle information includes humidity on an inner surface of a front windshield of the vehicle and a surface temperature of the front windshield, the environment information includes an in-vehicle temperature, and the air conditioner adjustment instruction includes a defrosting external circulation enabling instruction. The generation module 602 is further configured to: calculate a dew point based on the humidity on the inner surface of the front windshield and the in-vehicle temperature; determine a fogging risk level based on the surface temperature of the front windshield and the dew point; and generate, in response to the fogging risk level exceeding a predetermined level threshold, the defrosting external circulation enabling instruction, where an external circulation air damper opening degree in the defrosting external circulation enabling instruction is positively correlated with the fogging risk level, and the instruction category of the defrosting external circulation enabling instruction is the safety category.

In some embodiments, the environment information includes an out-of-vehicle pollutant concentration, and the air conditioner adjustment instruction includes a pollutant full internal circulation instruction. The generation module 602 is further configured to generate, in response to the out-of-vehicle pollutant concentration exceeding a predetermined concentration threshold, the pollutant full internal circulation instruction, where the pollutant full internal circulation instruction is configured to switch a current internal and external circulation mode of the air conditioner to a full internal circulation mode of the air conditioner, and an instruction category of the pollutant full internal circulation instruction is the environment category.

In some embodiments, the vehicle information includes a current operating condition, and the air conditioner adjustment instruction includes a full internal circulation instruction for car washing or window washing. The generation module 602 is further configured to generate, in response to the current operating condition being a car washing operating condition or a window washing operating condition, the full internal circulation instruction for car washing or window washing, where the full internal circulation instruction for car washing or window washing is configured to switch a current internal and external circulation mode of the air conditioner to a full internal circulation mode of the air conditioner, and an instruction category of the full internal circulation instruction for car washing or window washing is the environment category.

In some embodiments, the vehicle information includes an air outlet temperature of the air conditioner, and the air conditioner adjustment instruction includes a ventilation external circulation instruction. The generation module 602 is further configured to generate the ventilation external circulation instruction in response to a current internal and external circulation mode of the air conditioner being a full internal circulation mode and a duration of the full internal circulation mode exceeding a first predetermined duration threshold, where the ventilation external circulation instruction is configured to switch the current internal and external circulation mode from the full internal circulation mode to a full external circulation mode, and an instruction category of the ventilation external circulation instruction is the environment category.

In some embodiments, the vehicle information includes a current internal and external circulation mode of the air conditioner and a current control mode of the air conditioner, the environment information includes an in-vehicle temperature and an out-of-vehicle temperature, and the air conditioner adjustment instruction includes an energy-saving full internal circulation enabling instruction. The generation module 602 is further configured to generate the energy-saving full internal circulation enabling instruction in response to the current control mode of the air conditioner being a heating mode and the current internal and external circulation mode of the air conditioner being an automatic mode, or the current control mode of the air conditioner being a ventilation mode and the current internal and external circulation mode of the air conditioner being the automatic mode, or the current control mode of the air conditioner being a cooling mode and the in-vehicle temperature being lower than or equal to the out-of-vehicle temperature, where the energy-saving full internal circulation enabling instruction is configured to switch the current internal and external circulation mode of the air conditioner to a full internal circulation mode, and an instruction category of the energy-saving full internal circulation enabling instruction is the energy-saving category.

In some embodiments, the vehicle information includes a current vehicle speed and distribution of other vehicles within a predetermined range in front of the vehicle, and the air conditioner adjustment instruction includes a full external circulation instruction. The generation module 602 is further configured to generate the full external circulation instruction in response to the current vehicle speed exceeding a second predetermined vehicle speed, or the distribution of other vehicles within the predetermined range in front of the vehicle indicating that no other vehicles present.

In some embodiments, the vehicle information includes a current internal and external circulation mode of the air conditioner and a current control mode of the air conditioner, the environment information includes an in-vehicle temperature and an out-of-vehicle temperature, and the air conditioner adjustment instruction includes a full external circulation instruction. The generation module 602 is further configured to: generate the full external circulation instruction in response to the current control mode of the air conditioner being a ventilation mode and the current internal and external circulation mode of the air conditioner being an external circulation mode; and generate the full external circulation instruction in response to the current control mode of the air conditioner being a cooling mode and the in-vehicle temperature being higher than the out-of-vehicle temperature.

In some embodiments, the vehicle information includes a current operating condition, and the air conditioner adjustment instruction includes a target opening degree adjustment instruction. The generation module 602 is further configured to: determine, in response to the current operating condition being a rainy operating condition, a target opening degree based on a current water vapor content corresponding to the rainy operating condition and a first predetermined adjustment relationship, and generate, based on the target opening degree, the target opening degree adjustment instruction, where the target opening degree adjustment instruction is configured to adjust an external circulation air damper opening degree of the air conditioner from a current opening degree of the external circulation air damper to the target opening degree, and where in the first predetermined adjustment relationship, the current water vapor content is negatively correlated with the target opening degree.

In some embodiments, the vehicle information includes a current vehicle speed, and the air conditioner adjustment instruction includes an internal circulation air damper opening degree adjustment instruction and an external circulation air damper opening degree adjustment instruction. The generation module 602 is further configured to: determine, in response to the current vehicle speed exceeding a predetermined vehicle speed threshold, the internal circulation air damper opening degree adjustment instruction and the external circulation air damper opening degree adjustment instruction based on the current vehicle speed and a second predetermined adjustment relationship, where the internal circulation air damper opening degree adjustment instruction is configured to adjust an internal circulation air damper opening degree of the air conditioner from a current opening degree of an internal circulation air damper to an opening degree indicated by the internal circulation air damper opening degree adjustment instruction, and where the external circulation air damper opening degree adjustment instruction is configured to adjust an external circulation air damper opening degree of the air conditioner from a current opening degree of an external circulation air damper to an opening degree indicated by the external circulation air damper opening degree adjustment instruction, and where in the second predetermined adjustment relationship, the current vehicle speed is positively correlated with the internal circulation air damper opening degree, and the current vehicle speed is negatively correlated with the external circulation air damper opening degree.

For ease of description, the above apparatus is described by dividing the apparatus into various modules according to functions of various modules. Apparently, when implementing the present disclosure, a function of each module may be implemented in one or more pieces of software and/or hardware.

The apparatus in the above embodiments is configured to implement the corresponding method for controlling the air conditioner of the vehicle in any of the foregoing embodiments, and has advantageous effects of the corresponding method embodiments, which will not be repeated herein.

Based on the same inventive concept, corresponding to the method of any of the above embodiments, the present disclosure further provides an electronic device. The electronic device includes a memory, a processor, and a computer program stored in the memory and executable on the processor. The processor, when executing the program, is configured to implement the method for controlling the air conditioner of the vehicle according to any one of the above embodiments.

FIG. 7 shows a schematic structure diagram of hardware of the electronic device according to this embodiment. The device may include a processor 1010, a memory 1020, an input/output interface 1030, a communication interface 1040, and a bus 1050. The processor 1010, the memory 1020, the input/output interface 1030, and the communication interface 1040 are in communication connection with each other inside the device via the bus 1050.

The processor 1010 may be implemented by a general-purpose Central Processing Unit (CPU), a microprocessor, an Application Specific Integrated Circuit (ASIC), or one or more integrated circuits. The processor 1010 may be configured to execute a relevant program to realize the technical solutions according to the embodiments of this specification.

The memory 1020 may be implemented in forms such as a Read Only Memory (ROM), a Random Access Memory (RAM), a static storage device, and a dynamic storage device. The memory 1020 may store an operating system and other application programs. When the technical solutions according to the embodiments of this specification are implemented through software or firmware, relevant program codes are stored in the memory 1020 and called and executed by the processor 1010.

The input/output interface 1030 is configured to be connected to the input/output module to realize information input and output. The input/output module may be arranged in the device as a component (not illustrated), or externally connected to the device to provide a corresponding function. An input device may include a keyboard, a mouse, a touch screen, a microphone, various sensors, and the like. An output device may include a display, a speaker, a vibrator, an indicator light, and the like.

The communication interface 1040 is configured to be connected to a communication module (not illustrated) to realize communication interaction between the device and other devices. The communication module can realize communication in a wired manner (such as USB and a network cable), or in a wireless manner (such as mobile network, WIFI, and Bluetooth).

The bus 1050 includes a path for transmitting information among various components of the device (such as the processor 1010, the memory 1020, the input/output interface 1030, and the communication interface 1040).

It should be noted that although the above device only shows the processor 1010, the memory 1020, the input/output interface 1030, the communication interface 1040, and the bus 1050, the device may further include other components necessary for normal operation during specific implementation. In addition, it should be understood by those skilled in the art that the above device may only include components necessary for implementing the solutions of the embodiments of this specification, instead of all components shown in the figure.

The electronic device in the above embodiments is configured to implement the corresponding method for controlling the air conditioner of the vehicle in any of the foregoing embodiments, and has the advantageous effects of the corresponding method embodiments, which will not be repeated herein.

Based on the same inventive concept, corresponding to the method of any of the above embodiments, the present disclosure further provides a non-transitory computer readable storage medium having a computer instruction stored thereon. The computer instruction is configured to enable a computer to perform the method for controlling the air conditioner of the vehicle according to any one of the above embodiments.

## Claims

1. A method for controlling an air conditioner of a vehicle, the method comprising:
generating at least one air conditioner adjustment instruction, wherein an instruction category of the at least one air conditioner adjustment instruction comprises at least one of a safety category, an environment category, and an energy-saving category;
determining, based on a predetermined priority sequence corresponding to the instruction category, a target adjustment instruction from the at least one air conditioner adjustment instruction; and
adjusting, based on the target adjustment instruction, an internal and external circulation mode of the air conditioner.

2. The method according to claim 1, wherein said determining, based on the predetermined priority sequence corresponding to the instruction category, the target adjustment instruction from the at least one air conditioner adjustment instruction comprises:
determining a category priority corresponding to each of the at least one air conditioner adjustment instruction based on a category priority sequence in the predetermined priority sequence, wherein the instruction category in the category priority sequence is, in descending order, the safety category, the environment category, and the energy-saving category;
determining, in response to presence of a plurality of air conditioner adjustment instructions with the same category priority, an instruction priority of each of the plurality of air conditioner adjustment instructions with the same category priority based on an instruction priority sequence in the predetermined priority sequence; and
determining an air conditioner adjustment instruction with a highest priority among all the air conditioner adjustment instructions as the target adjustment instruction.

3. The method according to claim 2, wherein said determining, in response to the presence of the plurality of air conditioner adjustment instructions with the same category priority, the instruction priority of each of the plurality of air conditioner adjustment instructions with the same category priority based on the instruction priority sequence in the predetermined priority sequence comprises:
determining, in response to the instruction category of each of the plurality of air conditioner adjustment instructions being the environment category, the instruction priority of each of the plurality of air conditioner adjustment instructions based on an instruction priority sequence corresponding to the environment category, wherein an instruction in the instruction priority sequence corresponding to the environment category is, in descending order, a pollutant full internal circulation instruction, a full internal circulation instruction for car washing or window washing, and a ventilation external circulation instruction.

4. The method according to claim 1, wherein said generating the at least one air conditioner adjustment instruction comprises:
obtaining vehicle information and/or environment information; and
generating, based on the vehicle information and/or the environment information, the at least one air conditioner adjustment instruction.

5. The method according to claim 4, wherein the vehicle information comprises humidity on an inner surface of a front windshield of the vehicle and a surface temperature of the front windshield, the environment information comprises an in-vehicle temperature, and the air conditioner adjustment instruction comprises a defrosting external circulation enabling instruction,
wherein said generating, based on the vehicle information and/or the environment information, the at least one air conditioner adjustment instruction comprises:
calculating a dew point based on the humidity on the inner surface of the front windshield and the in-vehicle temperature;
determining a fogging risk level based on the surface temperature of the front windshield and the dew point; and
generating, in response to the fogging risk level exceeding a predetermined level threshold, the defrosting external circulation enabling instruction, wherein an external circulation air damper opening degree in the defrosting external circulation enabling instruction is positively correlated with the fogging risk level, and the instruction category of the defrosting external circulation enabling instruction is the safety category.

6. The method according to claim 4, wherein the environment information comprises an out-of-vehicle pollutant concentration, and the air conditioner adjustment instruction comprises a pollutant full internal circulation instruction,
wherein said generating, based on the vehicle information and/or the environment information, the at least one air conditioner adjustment instruction comprises:
generating, in response to the out-of-vehicle pollutant concentration exceeding a predetermined concentration threshold, the pollutant full internal circulation instruction, wherein the pollutant full internal circulation instruction is configured to switch a current internal and external circulation mode of the air conditioner to a full internal circulation mode of the air conditioner, and an instruction category of the pollutant full internal circulation instruction is the environment category.

7. The method according to claim 4, wherein the vehicle information comprises a current operating condition, and the air conditioner adjustment instruction comprises a full internal circulation instruction for car washing or window washing,
wherein said generating, based on the vehicle information and/or the environment information, the at least one air conditioner adjustment instruction comprises:
generating, in response to the current operating condition being a car washing operating condition or a window washing operating condition, the full internal circulation instruction for car washing or window washing, wherein the full internal circulation instruction for car washing or window washing is configured to switch a current internal and external circulation mode of the air conditioner to a full internal circulation mode of the air conditioner, and an instruction category of the full internal circulation instruction for car washing or window washing is the environment category.

8. The method according to claim 4, wherein the vehicle information comprises an air outlet temperature of the air conditioner, and the air conditioner adjustment instruction comprises a ventilation external circulation instruction,
wherein said generating, based on the vehicle information and/or the environment information, the at least one air conditioner adjustment instruction comprises:
generating the ventilation external circulation instruction in response to a current internal and external circulation mode of the air conditioner being a full internal circulation mode and a duration of the full internal circulation mode exceeding a first predetermined duration threshold, wherein the ventilation external circulation instruction is configured to switch the current internal and external circulation mode from the full internal circulation mode to a full external circulation mode, and an instruction category of the ventilation external circulation instruction is the environment category.

9. The method according to claim 4, wherein the vehicle information comprises a current internal and external circulation mode of the air conditioner and a current control mode of the air conditioner, the environment information comprises an in-vehicle temperature and an out-of-vehicle temperature, and the air conditioner adjustment instruction comprises an energy-saving full internal circulation enabling instruction,
wherein said generating, based on the vehicle information and/or the environment information, the at least one air conditioner adjustment instruction comprises:
generating the energy-saving full internal circulation enabling instruction in response to the current control mode of the air conditioner being a heating mode and the current internal and external circulation mode of the air conditioner being an automatic mode, or the current control mode of the air conditioner being a ventilation mode and the current internal and external circulation mode of the air conditioner being the automatic mode, or the current control mode of the air conditioner being a cooling mode and the in-vehicle temperature being lower than or equal to the out-of-vehicle temperature, wherein the energy-saving full internal circulation enabling instruction is configured to switch the current internal and external circulation mode of the air conditioner to a full internal circulation mode, and an instruction category of the energy-saving full internal circulation enabling instruction is the energy-saving category.

10. The method according to claim 4, wherein the vehicle information comprises a current vehicle speed and distribution of other vehicles within a predetermined range in front of the vehicle, and the air conditioner adjustment instruction comprises a full external circulation instruction,
wherein said generating, based on the vehicle information and/or the environment information, the at least one air conditioner adjustment instruction comprises:
generating the full external circulation instruction in response to the current vehicle speed exceeding a second predetermined vehicle speed, or the distribution of other vehicles within the predetermined range in front of the vehicle indicating that no other vehicles present.

11. The method according to claim 4, wherein the vehicle information comprises a current internal and external circulation mode of the air conditioner and a current control mode of the air conditioner, the environment information comprises an in-vehicle temperature and an out-of-vehicle temperature, and the air conditioner adjustment instruction comprises a full external circulation instruction,
wherein said generating, based on the vehicle information and/or the environment information, the at least one air conditioner adjustment instruction comprises:
generating the full external circulation instruction in response to the current control mode of the air conditioner being a ventilation mode and the current internal and external circulation mode of the air conditioner being an external circulation mode; and
generating the full external circulation instruction in response to the current control mode of the air conditioner being a cooling mode and the in-vehicle temperature being higher than the out-of-vehicle temperature.

12. The method according to claim 4, wherein the vehicle information comprises a current operating condition, and the air conditioner adjustment instruction comprises a target opening degree adjustment instruction,
wherein said generating, based on the vehicle information and/or the environment information, the at least one air conditioner adjustment instruction comprises:
determining, in response to the current operating condition being a rainy operating condition, a target opening degree based on a current water vapor content corresponding to the rainy operating condition and a first predetermined adjustment relationship, and generating, based on the target opening degree, the target opening degree adjustment instruction, wherein the target opening degree adjustment instruction is configured to adjust an external circulation air damper opening degree of the air conditioner from a current opening degree of an external circulation air damper to the target opening degree, and wherein in the first predetermined adjustment relationship, the current water vapor content is negatively correlated with the target opening degree.

13. The method according to claim 4, wherein the vehicle information comprises a current vehicle speed, and the air conditioner adjustment instruction comprises an internal circulation air damper opening degree adjustment instruction and an external circulation air damper opening degree adjustment instruction,
wherein said generating, based on the vehicle information and/or the environment information, the at least one air conditioner adjustment instruction comprises:
determining, in response to the current vehicle speed exceeding a predetermined vehicle speed threshold, the internal circulation air damper opening degree adjustment instruction and the external circulation air damper opening degree adjustment instruction based on the current vehicle speed and a second predetermined adjustment relationship, wherein the internal circulation air damper opening degree adjustment instruction is configured to adjust an internal circulation air damper opening degree of the air conditioner from a current opening degree of an internal circulation air damper to an opening degree indicated by the internal circulation air damper opening degree adjustment instruction, and wherein the external circulation air damper opening degree adjustment instruction is configured to adjust an external circulation air damper opening degree of the air conditioner from a current opening degree of an external circulation air damper to an opening degree indicated by the external circulation air damper opening degree adjustment instruction, and wherein in the second predetermined adjustment relationship, the current vehicle speed is positively correlated with the internal circulation air damper opening degree, and the current vehicle speed is negatively correlated with the external circulation air damper opening degree.

14. An electronic device, comprising:
a memory;
a processor; and
a computer program stored on the memory and executable on the processor, wherein the processor, when executing the computer program, implements the method according to any one of claims 1 to 13.

15. A vehicle, comprising the electronic device according to claim 14.
